# EUROPEAN PATENT SPECIFICATION

(11) **EP 4 123 768 B1**
(45) Date of publication and mention of the grant of the patent: **15.11.2023**
(21) Application number: 22179841.6
(22) Date of filing: 20.06.2022
(51) Int. Cl.: H01M 8/04029, H01M 8/04089, H01M 8/04298

(54) **FUEL CELL EMULATION SYSTEM AND METHOD TO EMULATE A FUEL CELL**
BRENNSTOFFZELLENEMULATIONSSYSTEM UND VERFAHREN ZUM EMULIEREN EINER BRENNSTOFFZELLE
SYSTÈME D'ÉMULATION DE PILE À COMBUSTIBLE ET PROCÉDÉ PERMETTANT D'ÉMULER UNE PILE À COMBUSTIBLE

(30) Priority: 14.07.2021 IT 202100018512
(43) Date of publication of application: 25.01.2023
(73) Proprietor: FPT Motorenforschung AG, 9320 Arbon (CH)
(72) Inventor: TSIKONIS, Leonidas, 9320 Arbon (CH)
(74) Representative: Fiume, Orazio

(56) References cited:
- KR-A- 20150 140 040
- US-A1- 2005 079 401

## Description

### Field of the invention

The present invention relates to the field of the fuel cells and in particular to the field of the emulators, useful to design and calibrate a complex system based on a real fuel cell. More in particular, the present invention relates to the Proton Exchange Membrane (PEM) fuel cells.

### Description of the prior art

A fuel cell is an electrochemical cell or array of electrochemical cells, the latter typically known as "fuel cell stack" that converts the chemical energy of a fuel, often hydrogen, and an oxidizing agent, usually oxygen, into electricity through a pair of redox reactions. Fuel cells are different from most batteries in requiring a continuous source of fuel and oxygen from air to sustain the chemical reaction, whereas in a battery the chemical energy usually comes from metals and their ions or oxides that are commonly already present in the battery, except in flow batteries.

Fuel cells can produce electricity continuously for as long as fuel and oxygen are supplied. KR 2015 0140040 A discloses a fuel cell emulator and a method to emulate a fuel cell including a first input port and a second input port, a first output port and a second output port, and a first cooling connection to be connected to a first cooling circuit.

In the following description, the expression "fuel cell" includes a plurality of fuel cells electrically interconnected, therefore, a fuel cell can imply a fuel cell stack.

A fuel cell that can be operatively implemented in the automotive field, in practice, is a stack of fuel cells electrically interconnected to achieve a predetermined rated voltage.

The thermal management of a fuel cell may be complex and, if not done correctly, may endanger the fuel cell's state of health.

Current fuel cells have problems such as reliability and durability, and the system control strategy has a significant impact on the performance of the entire fuel cell.

Fuel cells manufacturers provide for diagrams, tables, or other forms for disclosing information on the behavior of their products in connection with their working points and the physical parameters at the outputs of the fuel cell.

In a hydrogen fuel cell usually the inputs are the hydrogen and the air to carry out the oxidation and a cooling liquid, while the outputs are the cooling liquid, the electric energy produced by the oxidation, exhaust air, unused hydrogen and water.

A vehicle powered by a fuel cell requires a particularly complex fuel cell management system, which has the task to manage the inputs of the fuel cell in connection with the required electric power and the fuel cell outputs. Therefore, it is necessary to perform elaborate design and calibration of the fuel cell management system. However, the cost of fuel cell is high and it is not admissible to damage a high number of fuel cells during the calibration/design of a fuel cell management system.

It is clear that starting from the definition of fuel cell system according to UNECE R134 (E/ECE/324/Rev.2/Add.133 E/ECE/TRANS/505/Rev.2/Add.133), page 6, a "fuel cell management system" indicates a fuel cell system deprived of the fuel cell (stack). In other words a fuel cell management system includes everything is around the fuel cell to supply and control the fuel cell. Based on other terms used in the art, the fuel cell management system is the fuel cell balance of plant with the fuel cell control unit included.

### Summary of the invention

The main object of the present invention is to provide a system capable to reduce costs and risks during the design and calibration of a fuel cell management system, which overcomes the above problems/drawbacks.

The main principle of the invention is to propose a fuel cell emulator.

The emulator includes at least one burner or catalyst capable to carry out an oxidizing process of the supplied hydrogen and oxygen content of air by producing exclusively thermal energy. In other words, the sole energy produced has thermal nature instead of a real fuel cell, where the electric energy is a relevant fraction of the total energy produced including the thermal energy.

The proposed emulator includes all the usual inputs and outputs of the real fuel cell, but in addition, it includes also further ports connected to an extra cooling circuit, independent and separated by the fuel cell management system cooling circuit, to waste the extra thermal energy produced instead of the electric energy of the real fuel cell. According to a preferred embodiment of the invention, at least a further input is foreseen to introduce water, such as to emulate the production of water vapor of a PEM fuel cell on the hydrogen side of the fuel cell. In the following description, with "water" is intended liquid and/or vapour water.

According to a further embodiment of the invention that can be combined with the previous ones, the emulator includes a nitrogen source. In this case, nitrogen crossover in polymer electrolyte membrane fuel cell (PEMFC) system with anode recirculation is considered. Indeed, those fuel cells employed in automobiles are subjected to continuous changes in load and external operating conditions, making it important to account also for the nitrogen permeation. Thus, a further source is foreseen to introduce nitrogen, such that to emulate its crossover within the real polymer electrolyte membrane fuel cell.

It is clear from the above description that the emulator includes a first set of ports including input ports and output ports, identical to those of the real fuel cell intended to be emulated and a second set of ports
- to introduce chemical species produced by the real fuel cell, including nitrogen ad water vapor, and
- to extract the extra thermal energy produced instead of the electric energy.

A control unit is specifically arranged to monitor the first set of ports and, in particular, at least its input ports, and to control the output ports of the first set of ports and the second set of ports in order to assure at the output ports of the first set of ports the expected parameters corresponding to the real fuel cell behavior.

According to a preferred embodiment of the invention, the control unit is also configured to receive and generate signals representative of voltage and current corresponding to the emulated state of operation of the emulator or emulated fuel cell.

It is clear that, each port is arranged to manage a fluid, thus, the monitoring and control stage aims to control at least their flows, their temperatures and their pressures and preferably also the species composition.

Thanks to the present invention, the emulator replaces the real fuel cell and the fuel cell management system is tested and calibrated without the risk to destroy a real fuel cell. These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows a schematic embodiment of a fuel cell system, namely a fuel cell management system coupled with a fuel cell;
- Fig. 2 shows a schematic embodiment of a fuel cell emulator according to the present invention;
- Fig. 3 shows an exemplary implementation of the fuel cell emulator according to figure 2;
- Fig. 4 discloses an exemplary flow chart of the method subject of the present invention;
- Fig. 5 discloses the behavior of the fuel cell at different operating points, usually named as "polarization curve" and "power curve";
- Fig. 6 discloses an exemplary embodiment of control unit implemented to supervise the fuel cell emulator according to the previous figures.

The same reference numerals and letters in the figures designate the same or functionally equivalent parts. According to the present invention, the term "second element" does not imply the presence of a "first element", first, second, etc., are used only as labels for improving the clarity of the description and they should not be interpreted in a limiting way.

### Detailed description of the preferred embodiments

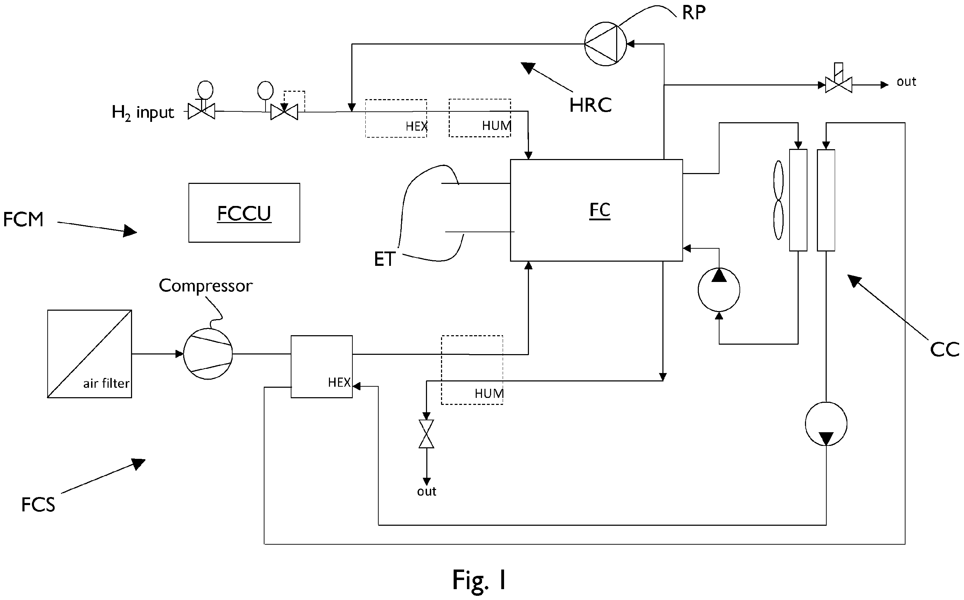

With reference to figure 1, a fuel cell system FCS includes a fuel cell FC and a fuel cell management system FCM which supplies the fuel cell with compressed air by means of an air source "Compressor", which can include a compressor, and hydrogen "H2 input" supplied by a hydrogen source, such as a hydrogen tank, and is cooled through a closed loop circuit CC.

The hydrogen stream exiting the fuel cell stack is partly and optionally recirculated through hydrogen recirculation circuit HRC by means of a recirculation pump RP or other equivalent method such as an injector/ejector system.

To ensure a high performance and better health and durability of the fuel cell, more hydrogen is supplied to the fuel cell than is needed for the reactions. Therefore, unused hydrogen is pumped back to the anode inlet of the FC using the jet pump RP or a recirculation blower or any suitable recirculation means. Thus, jet pump, recirculation pump or recirculation blower are synonyms.

On both the supply lines, namely for the compressed air and for the hydrogen, a heat exchanger can be arranged, preferably supplied by the circuit CC, in order to control the temperature thereof.

In addition, humidifier can be arranged on the supply lines, because the fuel cell membranes must stay hydrated to function properly.

In contrast, the exhaust gasses, before their delivery in the ambient air are properly dehumidified in order to recuperate water.

It is clear that, in order to obtain a correct management of the air/hydrogen/water ratio a certain number of sensors, valves and actuators are arranged and real time controlled by a fuel cell control unit FCCU.

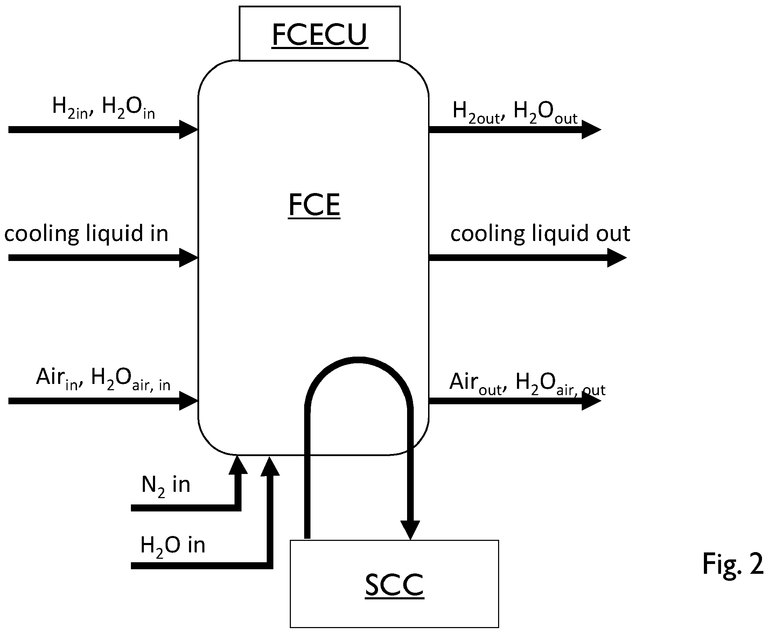

Figure 2 discloses schematically a fuel cell emulator according to the present invention.

In the following, the fuel cell stack emulator is simply named as "emulator".

It has the same interfaces as the emulated fuel cell stack as those schematized in figure 1.

It includes a first set of inputs and outputs identical to those of the real fuel cell stack with the exception of the electrical terminals ET disclosed in figure 1.

In particular, the input ports of the first set include hydrogen, air, humidifying water or water vapour, and temperature control liquid; the output ports of the first set include the temperature control liquid, hydrogen to be partially recirculated, and humidified exhaust air.

The main difference with a real, emulated, fuel cell is in the presence of a further temperature control connection, with its input and output ports, indicated in figure 2 with SCC cooling.

As clarified below, this extra-temperature-control procedure serves to dissipate the thermal energy produced instead of the electric energy. These further ports belong to a second set of ports specifically implemented in the emulator and lacking in the corresponding emulated fuel cell stack.

The emulator further includes a control unit FCECU independent and separated from the control unit FCCU arranged to control the fuel cell management system of the figure 1. The control unit FCECU of the emulator has the task to reproduce with a certain degree of precision the behaviour of a real, emulated, fuel cell, at least at the fluid input/output ports of the first set of ports, thanks to predetermined functions/maps loaded on its memory and acquired by the real fuel cell manufacturer.

According to the present description the real fuel cell (or fuel cell stack) is the one intended to be emulated.

Therefore, in the following the terms "real" and "emulated" are used in an exchangeable way accounting with to indicate the aim to emulate the behaviour of a real fuel cell intended to be emulated.

This means that in order to design, calibrate and test a fuel cell management system, the emulator is connected to the same fuel cell management system through the first set of ports, while the second set of ports are connected to additional sources and an additional (or second) cooling system SCC belonging to the fuel cell emulator.

One of the most relevant tasks developed by the FCECU is to direct the extra thermal energy produced by the burner or catalyst to the additional cooling system SCC such that for the fuel cell management system, the connection of the emulator instead of the corresponding real fuel cell is completely transparent.

Another task developed by the FCECU is the dosing of those species through the above second set of ports, which in a real fuel cell are species produced by the chemical, electrochemical and physical processes carried out by the fuel cell operating in the same fuel cell management system in the same operating conditions.

Therefore, in summary, the fuel cell emulator FCE of the present invention is arranged to emulate a real fuel cell FC when the latter is operatively connected to the fuel cell management system FCM. The fuel cell emulator, as the emulated fuel cell, includes
- a first input port "H2 in" and a second input port "Air in" to receive respectively hydrogen flow and air flow from the fuel cell management system, and
- a first output port H2+N2+H2O arranged to be connected to a recirculation circuit RC of the fuel cell management system and a second output port Air+H2O arranged to remove the exhaust air from the fuel cell stack;
- a first cooling connection CLIN, CLOUT to be connected to a first temperature control circuit CC of the fuel cell management system.

In addition, with respect to the emulated fuel cell, the present emulator further includes:
- a burner or catalytic reactor (BR) capable to carry out an oxidizing process of hydrogen and oxygen provided by the fuel cell management system to produce exclusively thermal energy,
- a second temperature control circuit SCC, independent and separated by said first temperature control circuit CC of the fuel cell management system, arranged to dissipate the extra thermal energy produced instead of the electric energy,
- control means FCECU arranged to control said second temperature control circuit SCC such that to dissipate an amount of thermal energy equivalent to the electric energy produced by the emulated fuel cell in the same operating conditions.

Preferably, the FCECU is programmed to control all internal components of the fuel cell emulator FCE so that it replicates (emulates):
- The electrochemical behaviour of the FC
- The thermal behaviour of the FC
- The pressure drops in the FC
- The flowrates in the streams of the FC
- The composition, namely the species concentrations, in the first outlet ports of the hydrogen H2+N2+H2O and air streams Air+H2O.

This effect is obtained by controlling flows and pressure drops in the:
- Gas & liquid streams
- Burner or Catalytic reactor
- Heat exchangers HEX1 - HEX3
through a number of actuators FC1 - FC4.

According to a preferred embodiment of the invention, the FCECU, which is connected to an external electric source is also arranged to supply voltage or electrical power corresponding to the tested operating point of the emulated fuel cell.

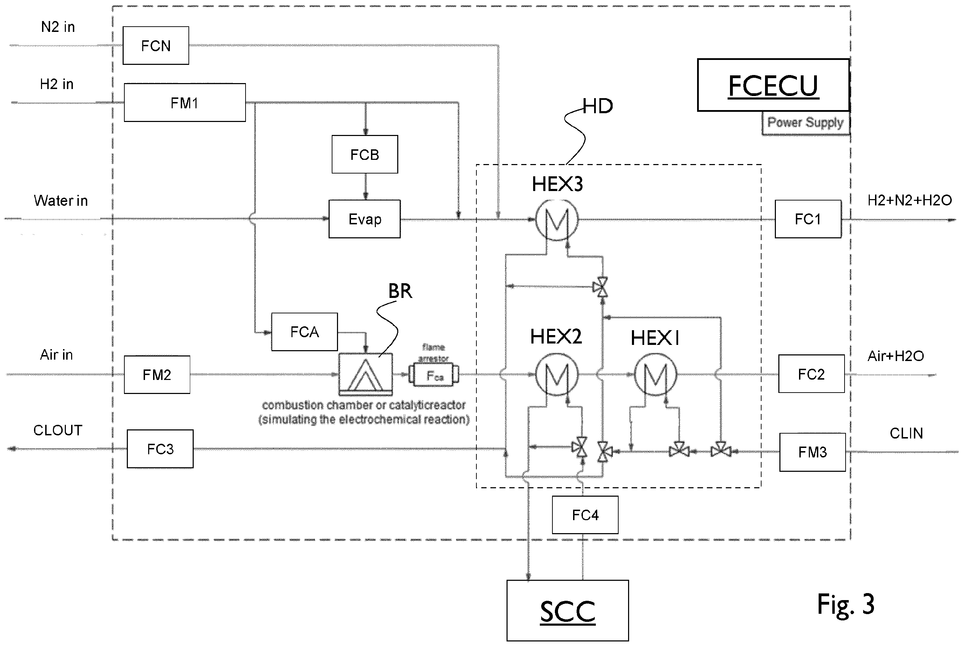

With reference to figure 3, the fuel cell emulator FCE, hereinafter "emulator" further includes partition means FCA, FCB to partition the hydrogen flow provided by the fuel management system such that to direct a first flow to the burner or catalytic reactor BR and a second flow to the first output port H2+N2+H2O of the emulator.

It is clear that, for convenience, the input and output ports are labelled with the species that are expected to define the flow crossing the same ports when the device is in operation. However, it should be clear that, when the fuel cell system is deactivated, no flows are present at input and output, or in specific operating conditions, some species can be absent.

As described above, the emulator comprises a water input "water in" suitable to be connected with a water source, an evaporator Evap and dosing means FCB arranged to addition said second flow with water vapor. Indeed, even if the emulator does not need vapour to hydrate a membrane, vapour is added in order to have a perfect matching of the emulator with the emulated fuel cell.

Preferably, the emulator further comprises a nitrogen input "N2 in", suitable to be connected to a nitrogen source, and second dosing means FCN arranged to addition said second flow with a nitrogen flow.

According to figure 3, several sensors are associated to the input ports. For example, a first sensor FM1 is associated with the first input port arranged to carry the hydrogen flow; a second sensor FM2 is associated with the second port arranged to carry the air flow; a third sensor FM3 is arranged on the first cooling connection, namely to the cooling circuit defined by fuel cell management system.

The control means of the emulator are arranged to receive signals from the sensors and to control at least the partition means FCA, FCB.

Preferably, the emulator control means are arranged also to control the heat distribution between the first cooling connection and the second temperature control circuit SCC, which is specific of the emulator.

More in particular, the emulator includes a heat distributor HD arranged to manage a partitioning of the heat produced by the burner or catalytic reactor to be split at least between the first temperature control circuit CC of the fuel cell management system and the second temperature control circuit SCC specific of the emulator.

Also the output flows at the first set of output ports have a heat content, therefore, the heat distributor HD is arranged to direct a portion of the heat produced by the burner or catalyst reactor to the first and/or second output ports.

The control means FCECU of the emulator are arranged to control said heat distributor on the basis of at least one look-up table or function, namely models, such that the fuel cell emulator behavior matches the emulated fuel cell.

The fuel cell manufacturer provide for graphs and/or look up table and/or functions/models disclosing the relationships between the several input and output port in several operating points. Such graph and/or look up tables and/or functions/models are exploited to force the emulator to behave as the fuel cell intended to be emulated.

The relationships between the several ports can be elaborated by searching a set of fitting functions for the same aim disclosed above.

According to a preferred embodiment of the invention, the heat distributor HD includes at least a first heat exchanger HEX1 and a second heat exchanger HEX2, both arranged on a pipe directly connecting the combustor or catalytic reactor BR to the second output port Air+H2O.

The first heat exchanger is operatively connected with the first cooling connection CLIN, CLOUT to deliver heat produced by the combustor or catalytic reactor to the first cooling circuit, while the second heat exchanger HEX2 is arranged to deliver heat produced by combustor or catalytic reactor to the second temperature control circuit SCC.

The heat distributor, preferably further includes a third heat exchanger HEX3 arranged on a pipe connecting said first input port "H2 in" and said first output port and is thermally connected with the second heat exchanger in order to control the temperature of the second flow.

The control means FCECU controls the emulator by monitoring flows and/or pressures and/or temperatures and/or humidity and/or gas compositions of the input and output flows, by controlling essentially actuators FC1 - FC4 and more in particular valves.

In particular, at least on each of the first and second output ports, the first cooling connection CLIN, CLOUT and the second temperature control circuit SCC, a pressure and/or flow control actuator FC1, FC2, FC3, FC4 is arranged under the control of the control means FCECU.

The present invention relates also to a method including
- oxidizing (i) of hydrogen and oxygen provided by the fuel cell management system by means of an emulator device FCE where a fuel cell is replaced by a burner or catalytic reactor BR, in order to produce exclusively thermal energy, and
- dissipating (ii) a thermal energy equivalent to the electric energy of the emulated fuel cell, through a second temperature control circuit SCC, independent and separated by a first temperature control circuit CC of the fuel cell management system.

Preferably, the method further comprises the step (iii) to distribute heat at the output ports of the emulator device such as that the device behavior matches the behavior of the emulated fuel cell and preferably the emulator device includes as a real fuel cell
- a first input port "H2 in" and a second input port "Air in" to receive respectively hydrogen flow and air flow from the fuel cell management system, and
- a first output port "H2+N2+H2O" arranged to be connected to a recirculation circuit RC of the fuel cell management system and a second output port "Air+H2O" arranged to remove the exhaust air from the fuel cell stack;
- a first cooling connection CLIN, CLOUT to be connected to a first cooling circuit CC of the fuel cell management system.

The fuel cell emulator is arranged such that the behavior matching step includes the controlling (iv) of flow, composition and temperature at least at each of said first output ports and flow and temperature at said first cooling connection.

Preferably, the method further comprises the step of introducing (v) in the device nitrogen and/or water in order to emulate the chemical, electrochemical and physical processes of the real fuel cell.

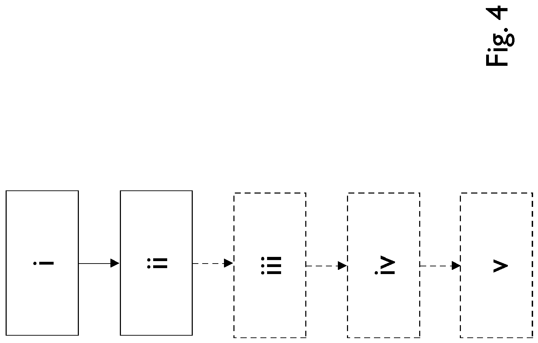

Figure 4 discloses an example of flow chart corresponding to the method steps described above. There, the dashed blocks should be considered as optional.

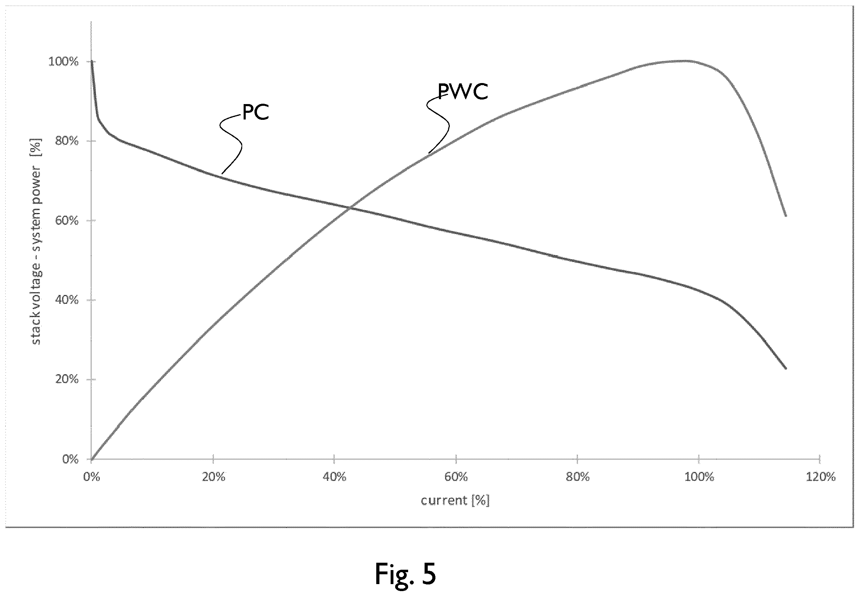

Figure 5 depicts the electrical behaviour in terms of polarisation curve PC & power curve PWC of the fuel cell as a function of the output current.

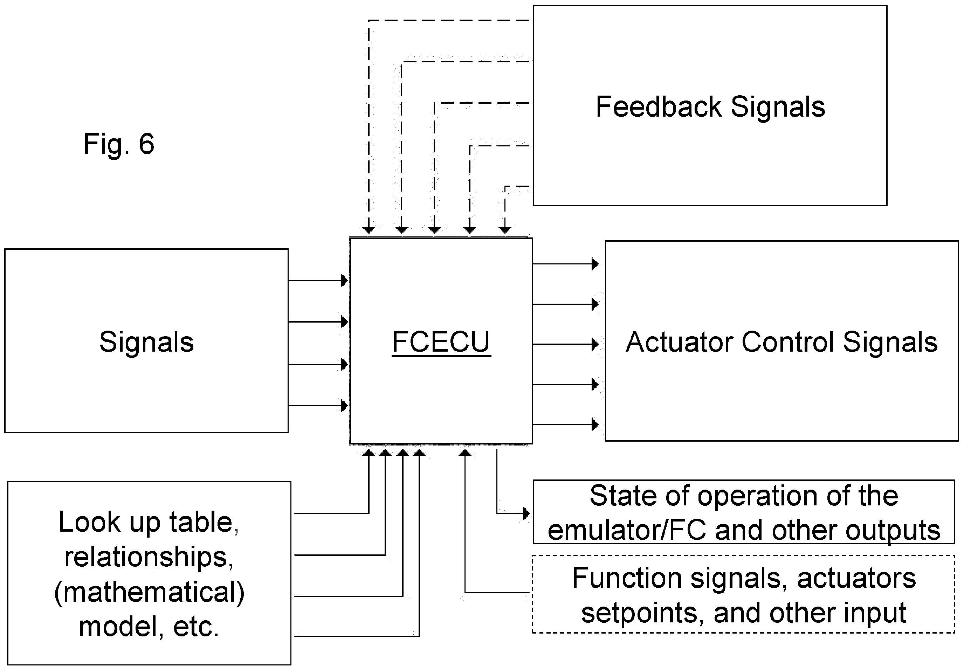

Figure 6 discloses the control means FCECU of the fuel cell emulator with its inputs and outputs.

The control means FCECU receive as input
- signals from the several sensor(s) disclosed above, such as FM1 - FM3,
- feedback signals from the several actuators FC1 - FC4, FCA, FCB, FCN such as to operate a closed loop control on the same actuators;
- look up table relationships and/or mathematical models among at least one input and one output of the first set of ports;
- other signals, for example, actuator set points and/or external conditions imposed by the FCM.

The control means FCECU, in response to the above inputs, control the above actuators in particular
- the amount of hydrogen to be directed to the burner BR and the amount to be directed to the first output port,
- the distribution (iii) of the heat among the heat exchangers HEX1, HEX2, HEX3,
- the circulation of the fluid of the second temperature control circuit SCC,
- the flows (iv) at the output ports, etc..;

In addition, the control means FCECU receives and returns signals representative of the State of operation to be passed from or to the fuel cell control unit FCCU of the the FCM or other external device. Such signals include gas and liquid streams temperature, flows, pressures, current, voltages, etc..

In othere words, the FCECU is programmed to receive and emulate signals generated by voltage and current sensors or other device that would be connected to the emulated fuel cell to be sent to the FCCU and other external devices. Preferably, the control means FCECU are also arranged to control the introduction (v) in the device of nitrogen and/or water in order to emulate the chemical, electrochemical and physical processes of the emulated real fuel cell. According to figure 3, when a combustor is implemented instead of a catalyst reactor, a flame arrestor is implemented in order to avoid the damaging of the second heat exchanger. Alternatively, the flame arrestor is integrated in the combustor.

In any case, preferably, the second heat exchanger is the first heat exchanger that the exhaust gasses meet leaving the burner.

Indeed, the first heat exchanger is arranged downstream of the second one on the pipe between the burner and the second output port.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure.

## Claims

1. Fuel cell emulator (FCE) arranged to emulate a fuel cell (FC) when the latter is operatively connected to a fuel cell management system (FCM), the fuel cell emulator, as the emulated fuel cell, including
- a first input port (H2 in) and a second input port (Air in) to receive respectively hydrogen flow and air flow from the fuel cell management system, and
- a first output port (H2+N2+H2O) arranged to be connected to a recirculation circuit (RC) of the fuel cell management system and a second output port (Air + H2O) arranged to remove the exhaust air from the fuel cell;
- a first cooling connection (CLIN, CLOUT) to be connected to a first cooling circuit (CC) of the fuel cell management system;
the fuel cell emulator further including:
- a burner or catalytic reactor (BR) capable to carry out an oxidizing process of hydrogen and oxygen provided by the fuel cell management system to produce exclusively thermal energy,
- a second temperature control circuit (SCC), independent and separated by said first cooling circuit (CC) of the fuel cell management system, arranged to dissipate thermal energy,
- control means (FCECU) arranged to control said second temperature control circuit (SCC) such that to dissipate an amount of thermal energy equivalent to the electric energy produced by the emulated fuel cell in the same operating conditions.

2. Emulator according to claim 1, comprising partition means (FCA, FCB) to partition said hydrogen flow such that to direct a first flow to the burner or catalytic reactor (BR) and a second flow to the first output port (H2+N2+H2O) of the emulator.

3. Emulator according to claim 1 or 2, wherein said control means (FCECU) are further configured to receive and generate signals representative of expected current and voltage values produced by the emulated fuel cell in the same operating conditions.

4. Emulator according to claim 2 o 3, further comprising water input (water in) suitable to be connected with a water source, an evaporator (Evap) and dosing means (FCB) arranged to addition said second flow with water vapor.

5. Emulator according to any one of claims 2 - 4, further comprising a nitrogen input (N2 in), suitable to be connected to a nitrogen source, and second dosing means (FCN) arranged to addition said second flow with a nitrogen flow.

6. Emulator according to claim 4 or 5, further comprising
- a first sensor (FM1) associated with said first input port,
- a second sensor (FM2) associated with said second input port,
- a third sensor (FM3) associated with said first cooling connection,
Wherein said control means (FCECU) are arranged to receive signals from said first, second and third sensors and to control at least said partition means (FCA, FCB).

7. Emulator according to any one of the previous claims, further comprising a heat distributor (HD) arranged to manage a partitioning of a heat produced by said burner or catalytic reactor to be directed to
- said first cooling circuit (CC),
- said second temperature control circuit (SCC),
- said first and/or second output ports;
Wherein said control means (FCECU) are arranged to control said heat distributor on the basis of at least one look-up table and/or function such that the fuel cell emulator behavior matches the emulated fuel cell.

8. Emulator according to claim 7, wherein said look up table or function are provided by emulated fuel cell manufacturer.

9. Emulator according to claim 7 or 8, wherein said heat distributor includes at least a first heat exchanger (HEX1) and a second heat exchanger (HEX2), both arranged on a pipe directly connecting the combustor or catalytic reactor (BR) to the second output port (Air + H2O), the first heat exchanger being operatively connected with the first cooling connection (CLIN, CLOUT) to deliver heat produced by the combustor or catalytic reactor to the first cooling circuit, the second heat exchanger (HEX2) being arranged to deliver heat produced by combustor or catalytic reactor to the second temperature control circuit (SCC); wherein the heat distributor further includes a third heat exchanger (HEX3) arranged on a pipe connecting said first input port (H2 in) and said first output port and thermal connected with said second heat exchanger in order to control a temperature of said second flow.

10. Emulator according to any one of the previous claims, wherein at least on each of
- said first and second output ports,
- said first temperature control connection (CLIN, CLOUT) and
- said second temperature control circuit (SCC),
a pressure and/or flow control actuator (FC1, FC2, FC3, FC4) is arranged and wherein said control means (FCECU) are arranged to control said pressure and/or flow control actuators (FC1, FC2, FC3, FC4).

11. Emulator according to any one of the previous claim 6 - 10, wherein said sensor is capable to detect a fluid flow and/or a fluid temperature and/or gas humidity and/or gas composition.

12. Method to emulate a fuel cell (FC) operatively connected to a fuel cell management system (FCM), the method including
- oxidizing (i) of hydrogen and oxygen provided by the fuel cell management system by means of an emulator device (FCE) where a fuel cell is replaced by a burner or catalytic reactor (BR), in order to produce exclusively thermal energy, and
- dissipating (ii) a thermal energy equivalent to the electric energy of the emulated fuel cell, through a second temperature control circuit (SCC), independent and separated by a first cooling circuit (CC) of the fuel cell management system.

13. Method according to claim 12, further comprising the step (iii) to distribute heat at the output ports of the emulator device such as that the device behavior matches the behavior of the emulated fuel cell.

14. Method according to claim 13, wherein said emulator device includes, as the emulated fuel cell,
- a first input port (H2 in) and a second input port (Air in) to receive respectively hydrogen flow and air flow from the fuel cell management system, and
- a first output port (H2+N2+H2O) arranged to be connected to a recirculation circuit (RC) of the fuel cell management system and a second output port (Air + H2O) arranged to remove the exhaust air from the fuel cell stack;
- a first cooling connection (CLIN, CLOUT) to be connected to a first cooling circuit (CC) of the fuel cell management system;
the fuel cell emulator further including:
- said burner or catalytic reactor (BR) capable to carry out an oxidizing process of hydrogen and oxygen provided by the fuel cell management system to produce exclusively thermal energy,
- said second temperature control circuit (SCC), independent and separated by a first cooling circuit (CC) of the fuel cell management system,
and wherein said behavior matching includes the controlling (iv) of flow, composition and temperature at least at each of said first output ports and flow and temperature at said first cooling connection.

15. Method according to any one of the claims 12 - 14, further comprising the step (v) of introducing in the device, nitrogen and/or water in order to emulate the chemical, electrochemical and physical processes of the emulated fuel cell.

16. Method according to any one of the previous claims 12 - 15, wherein said dissipating (ii) step further includes reception and generation of signals representative of expected current and voltage measurements produced by the emulated fuel cell in the same operating conditions.

17. Computer program comprising computer program code means adapted to perform all the steps of claim (i - v) according to any one of the previous claims 12 - 15, when said program is run on a control unit (FCECU) operatively associated with said first, second and third sensors and to said heat distributor (HD) according to claim 6.

18. A computer readable medium having a program recorded thereon, said computer readable medium comprising computer program code means adapted to perform all the steps of any one of the claims 12 - 15, when said program is run on a control unit (FCECU) operatively associated with said first, second and third sensors and to said heat distributor (HD) according to claim 7.

## Patentansprüche

1. Brennstoffzellen-Emulator (FCE), der so angeordnet ist, dass er eine Brennstoffzelle (FC) emuliert, wenn diese operativ mit einem Brennstoffzellen-Managementsystem (FCM) verbunden ist, wobei der Brennstoffzellen-Emulator, wie die emulierte Brennstoffzelle, folgendes umfasst
- eine erste Einlassöffnung (H2-in) und eine zweite Einlassöffnung (Air in), um einen Wasserstoffstrom und einen Luftstrom vom Brennstoffzellen-Managementsystem zu empfangen, und
- eine erste Auslassöffnung (H2+N2+H2O), die so angeordnet ist, dass sie mit einem Umwälzkreislauf (RC) des Brennstoffzellen-Managementsystems verbunden werden kann, und eine zweite Auslassöffnung (Air + H2O), die so angeordnet ist, dass sie die Abluft aus der Brennstoffzelle abführt;
- einen ersten Kühlanschluss (CLIN, CLOUT) zum Anschluss an einen ersten Kühlkreislauf (CC) des Brennstoffzellenmanagementsystems;
wobei der Brennstoffzellen-Emulator außerdem umfasst:
- ein Brenner oder katalytischer Reaktor (BR), der in der Lage ist, einen Oxidationsprozess von Wasserstoff und Sauerstoff durchzuführen, die vom Brennstoffzellen-Managementsystem bereitgestellt werden, um ausschließlich thermische Energie zu erzeugen,
- einen zweiten Temperatursteuerkreislauf (SCC), der vom ersten Kühlkreis (CC) des Brennstoffzellenmanagementsystems unabhängig und getrennt ist und dazu vorgesehen ist, um Wärmeenergie abzuleiten,
- Steuermittel (FCECU), die so angeordnet sind, dass sie den zweiten Temperatursteuerkreislauf (SCC) so steuern, dass eine Wärmeenergiemenge abgeführt wird, die der von der emulierten Brennstoffzelle unter denselben Betriebsbedingungen erzeugten elektrischen Energie entspricht.

2. Emulator nach Anspruch 1, Trennmittel (FCA, FCB) umfassend, um den Wasserstoffstrom so aufzuteilen, dass ein erster Strom zum Brenner oder zum katalytischen Reaktor (BR) und ein zweiter Strom zur ersten Auslassöffnung (H2+N2+H2O) des Emulators geleitet wird.

3. Emulator nach Anspruch 1 oder 2, wobei die Steuermittel (FCECU) außerdem so konfiguriert sind, dass sie Signale empfangen und erzeugen, die die erwarteten Strom- und Spannungswerte darstellen, die von der emulierten Brennstoffzelle unter denselben Betriebsbedingungen erzeugt werden.

4. Emulator nach Anspruch 2 oder 3, außerdem einen Wassereinlass (water in) umfassend, der geeignet ist, mit einer Wasserquelle verbunden zu werden, einen Verdampfer (Evap) und Dosiermittel (FCB), die so angeordnet sind, dass sie den zweiten Strom mit Wasserdampf ergänzen.

5. Emulator nach einem der Ansprüche 2-4, außerdem umfassend einen Stickstoffeinlass (N2 in), der zum Anschluss an eine Stickstoffquelle geeignet ist, und zweite Dosiermittel (FCN), die so angeordnet sind, dass sie den zweiten Fluss mit einem Stickstofffluss ergänzen.

6. Emulator nach Anspruch 4 oder 5, außerdem umfassend
- einen ersten Sensor (FM1), der der ersten Einlassöffnung zugeordnet ist,
- einen zweiten Sensor (FM2), der der zweiten Einlassöffnung zugeordnet ist,
- einen dritten Sensor (FM3), der der ersten Kühlanschluss zugeordnet ist,
wobei die Steuermittel (FCECU) so angeordnet sind, dass sie Signale von den ersten, zweiten und dritten Sensoren empfangen und mindestens die Trennmittel (FCA, FCB) steuern.

7. Emulator nach einem der vorhergehenden Ansprüche, außerdem einen Wärmeverteiler (HD) umfassend, der so angeordnet ist, dass er eine Aufteilung der von dem Brenner oder dem katalytischen Reaktor erzeugten Wärme bewerkstelligt, die wie folgt zugeleitet werden muss
- zum ersten Kühlkreislauf (CC),
- zur zweiten Temperatursteuerkreislauf (SCC),
- zu den ersten und/oder zweiten Auslassöffnungen; wobei die Steuermittel (FCECU) so angeordnet sind, dass sie den Wärmeverteiler auf der Grundlage mindestens einer Nachschlagetabelle und/oder Funktion steuern, so dass das Verhalten des Brennstoffzellenemulators mit der emulierten Brennstoffzelle übereinstimmt.

8. Emulator nach Anspruch 7, wobei die Nachschlagetabelle oder Funktion vom Hersteller der emulierten Brennstoffzelle bereitgestellt wird.

9. Emulator nach Anspruch 7 oder 8, wobei der Wärmeverteiler mindestens einen ersten Wärmetauscher (HEX1) und einen zweiten Wärmetauscher (HEX2) umfasst, die beide auf einem Rohr angeordnet sind, das die Brennkammer oder den katalytischen Reaktor (BR) direkt mit dem zweiten Auslassöffnung (Air + H2O) verbindet, wobei der erste Wärmetauscher operativ mit dem ersten Kühlanschluss (CLIN, CLOUT) verbunden ist, um von der Brennkammer oder dem katalytischen Reaktor erzeugte Wärme an den ersten Kühlkreislauf zu liefern, wobei der zweite Wärmetauscher (HEX2) dafür ausgelegt ist die von der Brennkammer oder dem katalytischen Reaktor erzeugte Wärme an den zweiten Temperatursteuerkreislauf (SCC) abzugeben; wobei der Wärmeverteiler außerdem einen dritten Wärmetauscher (HEX3) umfasst, der an einem Rohr angeordnet ist, das die erste Einlassöffnung (H2 in) und die erste Auslassöffnung verbindet, und thermisch mit dem zweiten Wärmetauscher verbunden ist, um eine Temperatur des zweiten Flusses zu steuern.

10. Emulator nach einem der vorherigen Ansprüche, wobei zumindest auf jedem von
- den ersten und zweiten Auslassöffnungen,
- dem ersten Temperaturkontrollanschluss (CLIN, CLOUT) und
- der zweiten Temperatursteuerkreislauf (SCC), ein Druck- und/oder Durchflusssteueraktuator (FC1, FC2, FC3, FC4) angeordnet ist und wobei die Steuermittel (FCECU) so angeordnet sind, dass sie die Druck- und/oder Durchflusssteueraktuatoren (FC1, FC2, FC3, FC4) steuern.

11. Emulator nach einem der vorhergehenden Ansprüche 6-10, wobei der Sensor in der Lage ist, einen Flüssigkeitsstrom und/oder eine Flüssigkeitstemperatur und/oder eine Gasfeuchtigkeit und/oder eine Gaszusammensetzung zu erfassen.

12. Verfahren zum Emulieren einer Brennstoffzelle (FC), die operativ mit einem Brennstoffzellenmanagementsystem (FCM) verbunden ist, wobei das Verfahren Folgendes umfasst:
- Oxidation (i) von Wasserstoff und Sauerstoff, die vom Brennstoffzellenmanagementsystem bereitgestellt werden, mittels einer Emulatorvorrichtung (FCE), wobei eine Brennstoffzelle durch einen Brenner oder einen katalytischen Reaktor (BR) ersetzt wird, um ausschließlich thermische Energie zu erzeugen, und
- Ableitung (ii) von einer thermischen Energie, die der elektrischen Energie der emulierten Brennstoffzelle entspricht, über einen zweiten Temperatursteuerkreislauf (SCC), unabhängig und getrennt durch einen ersten Kühlkreislauf (CC) des Brennstoffzellenmanagementsystems.

13. Verfahren nach Anspruch 12, außerdem den Schritt (iii) umfassend, um Wärme an den Auslassöffnungen der Emulatorvorrichtung so zu verteilen, dass das Verhalten der Vorrichtung dem Verhalten der emulierten Brennstoffzelle entspricht.

14. Verfahren nach Anspruch 13, wobei die Emulatorvorrichtung als die emulierte Brennstoffzelle, Folgendes umfasst:
- eine erste Einlassöfnung (H2 in) und eine zweite Einlassöffnung (Air in), um den Wasserstoffstrom bzw. den Luftstrom vom Brennstoffzellenmanagementsystem zu empfangen, und
- eine erste Auslassöffnung (H2+N2+H2O), die so angeordnet ist, dass sie mit einem Rezirkulationskreislauf (RC) des Brennstoffzellenmanagementsystems verbunden werden kann, und eine zweite Auslassöffnung (Air + H2O), die so angeordnet ist, dass sie die Abluft aus dem Brennstoffzellenstapel abführt;
- einen ersten Kühlanschluss (CLIN, CLOUT) zum Anschluss an einen ersten Kühlkreislauf (CC) des Brennstoffzellenmanagementsystems;
wobei de Brennstoffzellenemulator außerdem Folgendes umfasst:
- den Brenner oder den katalytische Reaktor (BR), die in der Lage sind, einen Oxidationsprozess von Wasserstoff und Sauerstoff durchzuführen, der vom Brennstoffzellenmanagementsystem bereitgestellt wird, um ausschließlich thermische Energie zu erzeugen,
- den zweiten Temperatursteuerkreislauf (SCC), der unabhängig und getrennt durch einen ersten Kühlkreislauf (CC) des Brennstoffzellenmanagementsystems ist,
und wobei die Verhaltensanpassung die Steuerung (iv) von Durchfluss, Zusammensetzung und Temperatur zumindest an jedem der ersten Auslassöffnungen und Durchfluss und Temperatur an der ersten Kühlanschluss umfasst.

15. Verfahren nach einem der Ansprüche 12-14, außerdem den Schritt (v) des Einbringens von Stickstoff und/oder Wasser in die Vorrichtung umfassend, um die chemischen, elektrochemischen und physikalischen Prozesse der emulierten Brennstoffzelle zu emulieren.

16. Verfahren nach einem der vorhergehenden Ansprüche 12-15, wobei der Dissipationsschritt (ii) außerdem den Empfang und die Erzeugung von Signalen umfasst, die die erwarteten Strom- und Spannungsmessungen darstellen, die von der emulierten Brennstoffzelle unter denselben Betriebsbedingungen erzeugt werden.

17. Computerprogramm, Computerprogrammcodemittel umfassend, die dazu geeignet sind, alle Schritte von Anspruch (i-v) gemäß einem der vorherigen Ansprüche 12-15 auszuführen, wenn das Programm auf einer Steuereinheit (FCECU) ausgeführt wird, die operativ mit dem ersten, zweiten und dritten Sensoren und an den Wärmeverteiler (HD) gemäß Anspruch 6, verbunden ist.

18. Computerlesbares Medium mit einem darauf aufgezeichneten Programm, wobei das computerlesbare Medium Computerprogrammcodemittel umfasst, die dazu geeignet sind, alle Schritte nach einem der Ansprüche 12-15 auszuführen, wenn das Programm auf einer operativ damit verbundenen Steuereinheit (FCECU) ausgeführt wird, die den ersten, zweiten und dritten Sensoren und an den Wärmeverteiler (HD) gemäß Anspruch 7, zugeordnet ist.

## Revendications

1. Émulateur de pile à combustible (FCE) agencé pour émuler une pile à combustible (FC) lorsque cette dernière est fonctionnellement connectée à un système de gestion de pile à combustible (FCM), l'émulateur de pile à combustible, en tant que la pile à combustible émulée, comprenant
- un premier port d'entrée (H2 in) et un deuxième port d'entrée (Air in) pour recevoir respectivement un flux d'hydrogène et un flux d'air du système de gestion de pile à combustible, et
- un premier port de sortie (H2+N2+H2O) agencé pour être connecté à un circuit de recirculation (RC) du système de gestion de pile à combustible et un deuxième port de sortie (Air + H2O) agencé pour évacuer l'air d'échappement de la pile à combustible;
- une première connexion de refroidissement (CLIN, CLOUT) destinée à être connectée à un premier circuit de refroidissement (CC) du système de gestion de pile à combustible;
l'émulateur de pile à combustible comprenant en outre:
- un brûleur ou réacteur catalytique (BR) capable de réaliser un processus d'oxydation de l'hydrogène et de l'oxygène fournis par le système de gestion de pile à combustible pour produire exclusivement de l'énergie thermique,
- un deuxième circuit de commande de température (SCC), indépendant et séparé dudit premier circuit de refroidissement (CC) du système de gestion de pile à combustible, agencé pour dissiper de l'énergie thermique,
- des moyens de commande (FCECU) agencés pour commander ledit deuxième circuit de commande de température (SCC) de manière à dissiper une quantité d'énergie thermique équivalente à l'énergie électrique produite par la pile à combustible émulée dans les mêmes conditions de fonctionnement.

2. Emulateur selon la revendication 1, comprenant des moyens de séparation (FCA, FCB) pour séparer ledit flux d'hydrogène de manière à diriger un premier flux vers le brûleur ou le réacteur catalytique (BR) et un deuxième flux vers le premier port de sortie (H2+N2+H2O) de l'émulateur.

3. Emulateur selon la revendication 1 ou 2, dans lequel lesdits moyens de commande (FCECU) sont en outre configurés pour recevoir et générer des signaux représentatifs des valeurs de courant et de tension attendues produites par la pile à combustible émulée dans les mêmes conditions de fonctionnement.

4. Emulateur selon la revendication 2 ou 3, comprenant en outre une entrée d'eau (water in) adaptée pour être connectée à une source d'eau, un évaporateur (Evap) et des moyens de dosage (FCB) agencés pour additionner ledit deuxième flux avec de la vapeur d'eau.

5. Emulateur selon l'une quelconque des revendications 2 à 4, comprenant en outre une entrée d'azote (N2 in), adaptée pour être connectée à une source d'azote, et des deuxièmes moyens de dosage (FCN) agencés pour additionner ledit deuxième flux avec un flux d'azote.

6. Emulateur selon la revendication 4 ou 5, comprenant en outre
- un premier capteur (FM1) associé audit premier port d'entrée,
- un deuxième capteur (FM2) associé audit deuxième port d'entrée,
- un troisième capteur (FM3) associé à ladite première connexion de refroidissement,
dans lequel lesdits moyens de commande (FCECU) sont agencés pour recevoir des signaux provenant desdits premier, deuxième et troisième capteurs et pour commander au moins lesdits moyens de répartition (FCA, FCB) .

7. Emulateur selon l'une quelconque des revendications précédentes, comprenant en outre un distributeur de chaleur (HD) agencé pour gérer une répartition d'une chaleur produite par ledit brûleur ou réacteur catalytique pour être dirigée vers
- ledit premier circuit de refroidissement (CC),
- ledit deuxième circuit de commande de température (SCC),
- lesdits premier et/ou deuxième ports de sortie;
dans lequel lesdits moyens de commande (FCECU) sont agencés pour commander ledit distributeur de chaleur sur la base d'au moins une table de consultation et/ou d'une fonction de telle sorte que le comportement de l'émulateur de pile à combustible corresponde à la pile à combustible émulée.

8. Emulateur selon la revendication 7, dans lequel ladite table de consultation ou fonction est fournie par le fabricant de piles à combustible émulées.

9. Emulateur selon la revendication 7 ou 8, dans lequel ledit distributeur de chaleur comprend au moins un premier échangeur de chaleur (HEX1) et un deuxième échangeur de chaleur (HEX2), tous deux disposés sur une canalisation reliant directement la chambre de combustion ou réacteur catalytique (BR) au deuxième port de sortie (Air + H2O), le premier échangeur de chaleur étant connecté de manière fonctionnelle à la première connexion de refroidissement (CLIN, CLOUT) pour fournir la chaleur produite par la chambre de combustion ou le réacteur catalytique au premier circuit de refroidissement, le deuxième échangeur de chaleur (HEX2) étant agencé pour délivrer la chaleur produite par la chambre de combustion ou le réacteur catalytique au deuxième circuit de contrôle de la température (SCC); dans lequel le distributeur de chaleur comprend en outre un troisième échangeur de chaleur (HEX3) disposé sur un tuyau reliant ledit premier port d'entrée (H2 in) et ledit premier port de sortie et connecté thermiquement audit deuxième échangeur de chaleur afin de commander une température dudit deuxième flux.

10. Emulateur selon l'une quelconque des revendications précédentes, dans lequel au moins sur chacun
- desdits premier et deuxième ports de sortie,
- de ladite première connexion de commande de température (CLIN, CLOUT) et
- dudit deuxième circuit de commande de température (SCC), un actionneur de commande de pression et/ou de débit (FC1, FC2, FC3, FC4) est disposé et dans lequel lesdits moyens de commande (FCECU) sont agencés pour commander lesdits actionneurs de commande de pression et/ou de débit (FC1, FC2, FC3, FC4).

11. Emulateur selon l'une quelconque des revendications précédentes 6 à 10, dans lequel ledit capteur est capable de détecter un flux de fluide et/ou une température de fluide et/ou une humidité de gaz et/ou une composition de gaz.

12. Procédé pour émuler une pile à combustible (FC) fonctionnellement connectée à un système de gestion de pile à combustible (FCM), le procédé comprenant
- oxydation (i) de l'hydrogène et de l'oxygène fournis par le système de gestion de pile à combustible au moyen d'un dispositif émulateur (FCE) où une pile à combustible est remplacée par un brûleur ou un réacteur catalytique (BR), afin de produire exclusivement de l'énergie thermique, et
- dissipation (ii) d'une énergie thermique équivalente à l'énergie électrique de la pile à combustible émulée, par un deuxième circuit de commande de la température (SCC), indépendant et séparé par un premier circuit de refroidissement (CC) du système de gestion de pile à combustible.

13. Procédé selon la revendication 12, comprenant en outre l'étape (iii) consistant à distribuer la chaleur au niveau des ports de sortie du dispositif émulateur de telle sorte que le comportement du dispositif corresponde au comportement de la pile à combustible émulée.

14. Procédé selon la revendication 13, dans lequel ledit dispositif émulateur comprend, en tant que pile à combustible émulée,
- un premier port d'entrée (H2 in) et un deuxième port d'entrée (Air in) pour recevoir respectivement le flux d'hydrogène et le flux d'air du système de gestion de pile à combustible, et
- un premier port de sortie (H2+N2+H2O) agencé pour être connecté à un circuit de recirculation (RC) du système de gestion de pile à combustible et un deuxième port de sortie (Air + H2O) agencé pour évacuer l'air d'échappement de la pile à combustible;
- une première connexion de refroidissement (CLIN, CLOUT) destinée à être connectée à un premier circuit de refroidissement (CC) du système de gestion de pile à combustible;
l'émulateur de pile à combustible comprenant en outre:
- ledit brûleur ou réacteur catalytique (BR) capable de réaliser un processus d'oxydation de l'hydrogène et de l'oxygène fournis par le système de gestion de pile à combustible pour produire exclusivement de l'énergie thermique,
- ledit deuxième circuit de commande de la température (SCC), indépendant et séparé d'un premier circuit de refroidissement (CC) du système de gestion de pile à combustible,
et dans lequel ladite adaptation de comportement comprend le commande (iv) du débit, de la composition et de la température au moins au niveau de chacun desdits premiers ports de sortie et du débit et de la température au niveau de ladite première connexion de refroidissement.

15. Procédé selon l'une quelconque des revendications 12 à 14, comprenant en outre l'étape (v) consistant à introduire dans le dispositif de l'azote et/ou de l'eau afin d'émuler les processus chimiques, électrochimiques et physiques de la pile à combustible émulée.

16. Procédé selon l'une quelconque des revendications précédentes 12 à 15, dans lequel ladite étape de dissipation (ii) comprend en outre la réception et la génération de signaux représentatifs des mesures de courant et de tension attendues produites par la pile à combustible émulée dans les mêmes conditions de fonctionnement.

17. Programme informatique comprenant des moyens de code de programme informatique adaptés pour exécuter toutes les étapes de la revendication (i - v) selon l'une quelconque des revendications précédentes 12 à 15, lorsque ledit programme est exécuté sur une unité de commande (FCECU) fonctionnellement associée auxdits premier, deuxième et troisième capteurs et audit distributeur de chaleur (HD) selon la revendication 6.

18. Support lisible par ordinateur sur lequel est enregistré un programme, ledit support lisible par ordinateur comprenant des moyens de code de programme informatique adaptés pour exécuter toutes les étapes de l'une quelconque des revendications 12 à 15, lorsque ledit programme est exécuté sur une unité de commande (FCECU) fonctionnellement associée à auxdits premier, deuxième et troisième capteurs et audit distributeur de chaleur (HD) selon la revendication 7.
